# EUROPÄISCHE PATENTSCHRIFT

(11) **EP 0 979 935 B1**
(45) Veröffentlichungstag und Bekanntmachung des Hinweises auf die Patenterteilung: **15.10.2003**
(21) Anmeldenummer: 99112137.7
(22) Anmeldetag: 24.06.1999
(51) Int. Cl.: F02D 41/02, F01N 3/20

(54) **Verfahren und Vorrichtung zum Stickoxidabbau in einem Verbrennungsabgas**
Method and apparatus for decomposing nitrogen oxides in exhaust gas
Procédé et dispositif de décomposition des oxydes d'azote dans le gaz d'échappement

(30) Priorität: 11.08.1998 DE 19836249
(43) Veröffentlichungstag der Anmeldung: 16.02.2000
(73) Patentinhaber: DaimlerChrysler AG, 70567 Stuttgart (DE)
(72) Erfinder: Boegner, Walter, 71686 Remseck (DE); Kemmler-Sack, Sibylle, Prof., 72072 Tübingen (DE); Konrad, Brigitte, 89134 Blaustein (DE); Krutzsch, Bernd, Dr., 73770 Denkendorf (DE); Voigtländer, Dirk, Dr., 70825 Korntal-Münchingen (DE); Weibel, Michel, Dr., 70619 Stuttgart (DE); Wenninger, Günter, 70599 Stuttgart (DE)

(56) Entgegenhaltungen:
- EP-A- 0 488 386
- EP-A- 0 773 354
- DE-C- 4 319 294
- US-A- 5 409 671
- PATENT ABSTRACTS OF JAPAN vol. 018, no. 352 (M-1631), 4. Juli 1994 (1994-07-04) & JP 06 088518 A (TOYOTA MOTOR CORP), 29. März 1994 (1994-03-29)
- PATENT ABSTRACTS OF JAPAN vol. 017, no. 376 (C-1084), 15. Juli 1993 (1993-07-15) & JP 05 064724 A (MITSUBISHI ATOM POWER IND INC), 19. März 1993 (1993-03-19)
- PATENT ABSTRACTS OF JAPAN vol. 014, no. 106 (C-0694), 27. Februar 1990 (1990-02-27) & JP 01 310742 A (TOYOTA MOTOR CORP), 14. Dezember 1989 (1989-12-14)

## Beschreibung

Die Erfindung bezieht sich auf ein Verfahren und eine Vorrichtung zum Stickoxidabbau im Abgas einer Verbrennungseinrichtung nach dem Oberbegriff des Anspruchs 1 bzw. 2. Ein solches Verfahren und eine solche Vorrichtung eignen sich insbesondere zur Minderung der Stickoxidemissionen durch die Abgase von Verbrennungsmotoren in Kraftfahrzeugen.

Ein Verfahren und eine Vorrichtung dieser Art sind in der Offenlegungsschrift EP 0 773 354 A1 beschrieben. Dort wird in den Fettbetriebsphasen einer Brennkraftmaschine, d.h. im Betrieb der Brennkraftmaschine mit stöchiometrischem oder überstöchiometrischem Kraftstoffanteil im verbrannten Kraftstoff/Luft-Gemisch, durch einen Dreiwege-Katalysator Ammoniak aus Stickoxiden und Wasserstoff, die Abgas enthalten sind, synthetisiert. Der erzeugte Ammoniak wird in einer nachgeschalteten zweiten Katalysatoreinheit adsorbiert und dadurch zwischengespeichert. In den Magerbetriebsphasen läßt der Dreiwege-Katalysator die im Abgas enthaltenen Stickoxide zur nachgeschalteten zweiten Katalysatoreinheit passieren, wo dann der Ammoniak wieder freigesetzt wird und als Reduktionsmittel für eine Reduktionsreaktion dient, mit der die Stickoxide unter gleichzeitiger Oxidation des Ammoniaks in Stickstoff umgewandelt werden. Sobald im Magerbetrieb die zwischengespeicherte Ammoniakmenge erschöpft ist, wird auf fetten Brennkraftmaschinenbetrieb umgeschaltet.

In der Patentschrift DE 43 19 294 C1 sind Abgasreinigungsanlagen mit einem oder mehreren parallelen Stickoxid-Adsorberkatalysatoren offenbart, z.B. solche mit zwei parallelen Adsorptionskatalysatoren, von denen abwechselnd jeweils einer im Adsorptions- und der andere im Desorptionsmodus betrieben werden, wobei der Abgasstrom, welcher aus dem im Desorptionsmodus arbeitenden Adsorberkatalysator austritt, in eine Ansaugleitung der Brennkraftmaschine rückgeführt wird. Alternativ kann nur ein Stickoxid-Adsorberkatalysator vorgesehen sein, dem zusätzlich ein Dreiwege-Katalysator mit serieller oder paralleler Abgasströmungsführung zugeordnet ist.

Daneben ist es bekannt, die Stickoxide im Abgas von Verbrennungseinrichtungen unter Beibehaltung eines kontinierlichen Magerbetriebs der Verbrennungseinrichtung dadurch abzubauen, daß dem Abgas kontinuierlich ein geeignetes Reduktionsmittel zudosiert wird, beispielsweise ein Kohlenwasserstoff, wie Diesel- oder Benzin-Kraftstoff, oder ein Alkohol, Ammoniak, Harnstoff oder Wasserstoff. Diese Art des Stickstoffabbaus ist als selektive katalytische Stickoxidreduktion oder SCR-Verfahren bekannt, siehe z.B. auch die Zeitschriftenaufsätze M. Shelef, Selective Catalytic Reduction of NOₓ with N-Free Reductants, Chem. Rev. 1995, 95, Seite 209 und R.A. Grinsted et al., The relation between deactivation of CuZSM-5 in the selective reduction of NO and dealumination of the zeolite, ZEOLITES, 1993, Band 13, Seite 602.

Aus der Literatur ist des weiteren bekannt, daß Stickoxide auch durch eine direkte katalytische Spaltungsreaktion abgebaut werden können und als hierfür geeignetes Katalysatormaterial, d.h. als sogenannter Spaltkatalysator, z.B. das kupferhaltige Zeolithmaterial Cu-ZSM-5 verwendbar ist, siehe M. Iwamoto, Heterogeneous catalysis for removal of NO in excess oxygen - Progress in 1994, Catalysis Today 29 (1996), Seite 29. Daneben sind auch bestimmte Edelmetalle und Übergangsmetalloxidverbindungen in der Lage, als Spaltkatalysator zur direkten katalytischen Stickoxidspaltung zu fungieren. Durch benachbarte Anordnung der Stickoxide an den Metalladsorptionsstellen des Spaltkatalysators werden die NO-Bindungen gespalten, und es kommt zur Paarung der adsorptiv gebundenen Stickstoffatome unter Freisetzung molekularen Stickstoffs. In einem Übergangsstadium kann bei einer teilweise mit Sauerstoff belegten Katalysatoroberfläche durch Reaktion des atomar adsorbierten Stickstoffs mit NO auch Lachgas entstehen. Die Wirksamkeit dieser Spaltkatalysatormaterialien verschlechtert sich jedoch durch den bei der Spaltung an der Oberfläche chemisorptiv gebundenen Sauerstoff. Ein Einsatz dieser Spaltungsreaktion ohne Verwendung von Reduktionsmitteln stößt daher bei mager betriebenen Verbrennungseinrichtungen, wie mager betriebenen Kraftfahrzeugmotoren, aufgrund deren sauerstoffreichen Abgases auf Schwierigkeiten. Zwar zeigt sich, daß Cu-ZSM-5 als Spaltkatalysator in einem anfänglichen Prozeßstadium im sauerstoffreichen Abgas eine ausreichende Spaltkatalysatoraktivität besitzt, jedoch unter hydrothermalen Bedingungen sehr rasch irreversibel degeneriert, indem eine Desaluminierung und Cu-Migration stattfindet und das Material zudem durch Schwefel vergiftet wird.

Das Dokument US 5 409 671 A offenbart ein Verfahren und eine Vorrichtung zum Stickoxidabbau im Abgas einer Verbrennungseinrichtung, wobei die stickoxide im Magerbetrieb unittels, einer direkten Katalytischen Spaltungsreaktion abgebaut werden die von einem Spaltkatalysatormaterial katalysiert wird und wobei ein Metall, das im Katalysatormaterial enthalten ist, den auf dem katalysatormaterial gebundenen sauerstoff entfernt.

Der Erfindung liegt als technisches Problem die Bereitstellung eines Verfahrens und einer Vorrichtung der eingangs genannten Art zugrunde, durch die sich eine Verbrennungseinrichtung kraftstoffverbrauchsgünstig betreiben läßt und gleichzeitig die Stickoxidemissionen in deren Abgas niedrig gehalten werden können.

Die Erfindung löst dieses Problem durch die Bereitstellung eines Verfahrens mit den Merkmalen des Anspruchs 1 sowie einer Vorrichtung mit den Merkmalen des Anspruchs 2. Diese erfindungsgemäße Lösung beinhaltet eine Kombination eines abwechselnden Mager- und Fettbetriebs der Verbrennungseinrichtung mit einer direkten katalytischen Spaltungsreaktion zum Abbau von im Abgas der Verbrennungseinrichtung enthaltenen Stickoxiden derart, daß die vor allem in den Magerbetriebsphasen anfallenden Stickoxide direkt katalytisch gespalten werden, während der dadurch in seiner Spaltkatalysatoraktivität nachlassende Spaltkatalysator in den Fettbetriebsphasen regeneriert wird. In dieser Regenerationsphase kann der sich an das Spaltkatalysatormaterial im Magerbetrieb anlagernde und dessen Spaltkatalysatoraktivität herabsetzende Sauerstoff wieder entfernt werden. Vorteilhafterweise ist bei diesem Verfahren und dieser Vorrichtung weder eine Stickoxidzwischenspeicherung, noch der Einsatz eines Reduktionsmittels für den Stickoxidabbau zwingend erforderlich. Zudem zeigt sich, daß die Fettbetriebsphasen vergleichsweise kurz, d.h. deutlich kürzer als die Magerbetriebsphasen, gehalten werden können, so daß sich insgesamt dennoch ein kraftstoffverbrauchsgünstiger Betrieb der Verbrennungseinrichtung erzielen läßt.

Bei einer nach Anspruch 3 weitergebildeten Vorrichtung ist Wismut im Spaltkatalysatormaterial enthalten. Es zeigt sich, daß dies die Sauerstoffionenleitfähigkeit und/oder die Sauerstoffmobilität des an das Spaltkatalysatormaterial angelagerten Sauerstoffs erhöht, was dessen Regeneration erleichtert und daher dazu beiträgt, die Fettbetriebsphasen möglichst kurz halten zu können. Weiter zeigt sich, daß hierzu eine Ausgestaltung der Vorrichtung nach Anspruch 4 günstig ist, bei der das Wismut in Form einer δ-Wismutoxidphase enthalten ist. Als günstig erweist sich zudem eine Edelmetalldotierung des Spaltkatalysatormaterials, wie bei einer nach Anspruch 5 weitergebildeten Vorrichtung vorgesehen.

Bei einer nach Anspruch 6 weitergebildeten Vorrichtung beinhaltet deren Abgasreinigungsanlage eine oder mehrere weitere Katalysatoreinheiten, die zur Spaltkatalysatoreinheit im Abgastrakt in Reihe geschaltet sind. Je nach Bedarf dienen diese Katalysatoreinheiten zur Oxidation von Kohlenwasserstoffen, Kohlenmonoxid und/oder Wasserstoff und/oder zur Reduktion von Stickoxiden, letzteres insbesondere während der Fettbetriebsphasen, in denen das Spaltkatalysatormaterial regeneriert wird.

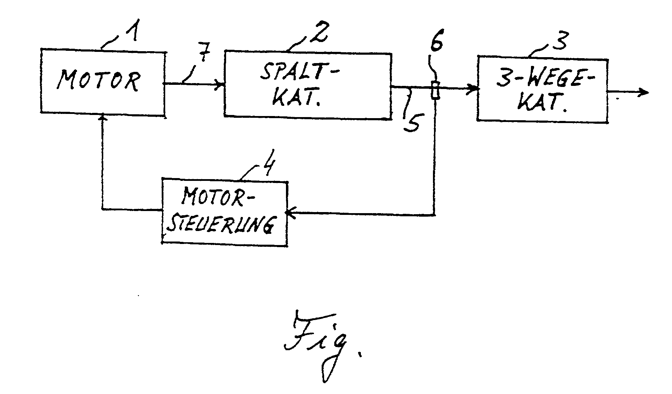

Eine vorteilhafte Ausführungsform der Erfindung ist in der Zeichnung dargestellt und wird nachfolgend beschrieben.

Die einzige Figur zeigt ein schematisches Blockdiagramm eines Kraftfahrzeug-Verbrennungsmotors mit einer zugehörigen Abgasreinigungsvorrichtung.
Wie in der Figur schematisch dargestellt, ist einem Kraftfahrzeug-Verbrennungsmotor 1, der möglichst mager und damit kraftstoffverbrauchsoptimal betrieben werden soll, eine Abgasreinigungsvorrichtung zugeordnet, die eine Stickoxid-Spaltkatalysatoreinheit 2 und einen dieser nachgeschalteten Dreiwegekatalysator 3 beinhaltet. Letzterer ist von einem üblichen Aufbau und enthält beispielsweise Pt als katalytisch aktives Edelmetall. Die Spaltkatalysatoreinheit 2 beinhaltet ein geeignetes Spaltkatalysatormaterial zur Katalysierung einer direkten Stickoxidspaltungsreaktion. Als Spaltkatalysatormaterial kann z.B. das kupferhaltige Zeolithmaterial Cu-ZSM-5 eingesetzt werden. Alternativ zu diesem und anderen für diesen Zweck bekannten Materialien läßt sich ein Wismutoxidmaterial, insbesondere eine δ-Wismutoxidphase, als Spaltkatalysatormaterial verwenden, wobei optional eine Edelmetalidotierung vorgesehen sein kann. Es zeigt sich, daß diese Materialien die Regeneration des Spaltkatalysatormaterials erleichtern, indem sie die Sauerstoffionenleitfähigkeit und/oder die Sauerstoffmobilität des sich in den Magerbetriebsphasen, in denen ein sauerstoffreiches Abgas vorliegt, allmählich anlagernden Sauerstoffs erhöhen.

Der Verbrennungsmotor 1 wird unter Steuerung mittels eines Motorsteuergerätes 4 abwechselnd im Magerbetrieb, d.h. mit unter- stöchiometrischem bis höchstens stöchiometrischem Kraftstoffanteil im Kraftstoff/Luft-Gemisch, unterbrochen durch kurze Fettbetriebsphasen, d.h. Phasen mit stöchiometrischem oder überstöchiometrischem, überschüssigem Kraftstoffanteil, in Abhängigkeit vom Katalysatoraktivitätszustand des Spaltkatalysatormaterials betrieben. Das Motorsteuergerät 4 erkennt den Aktivitätszustand des Spaltkatalysatormaterials durch Erfassung der Stickoxidkonzentration im aus der Spaltkatalysatoreinheit 2 austretenden Abgasstrom 5, wozu dort ein Stickoxidsensor 6 angeordnet ist.

Während der Magerbetriebsphasen, in denen der aus dem Motor 1 austretende Abgasstrom 7 sauerstoffreich ist und abzubauende Stickoxide enthält, werden die Stickoxide in der Spaltkatalysatoreinheit 2 direkt katalytisch gespalten und dadurch abgebaut. Das Spaltkatalysatormaterial katalysiert diesen Vorgang durch seine aktiven Zentren in an sich bekannter Weise. Mit zunehmender Betriebsdauer im Magerbetrieb werden diese aktiven Zentren immer mehr durch chemisorptiv gebundenen Sauerstoff blockiert, so daß sich die Spaltkatalysatoraktivität verringert und die Stickoxidkonzentration im Abgasstrom 5 an der Austrittsseite der Spaltkatalysatoreinheit 2 anzusteigen droht. Das Motorsteuergerät 4 erkennt dies über den NOₓ-Sensor 6 und schaltet dann rechtzeitig auf eine Fettbetriebsphase um. Dadurch wird die Konzentration an Wasserstoff, Kohlenmonoxid und Kohlenwasserstoffen im aus dem Motor 1 austretenden Abgas stark erhöht. Unter diesen Bedingungen werden die durch sauerstoffadsorptiv belegten, aktiven Zentren des Spaltkatalysatormaterials regeneriert. Dies wird durch eine hohe Sauerstoffionenleitfähigkeit und/oder eine gute Sauerstoffmobilität bei Wahl eines entsprechenden Spaltkatalysatormaterials, wie oben angegeben, unterstützt. Nach dieser regenerativen Behandlung, für die verglichen mit den Magerbetriebsphasen im allgemeinen sehr viel kürzere Fettbetriebsphasen ausreichen, wird der Motor 1 vom Motorsteuergerät 4 wieder auf Magerbetrieb umgeschaltet. Während des Fettbetriebs können die Kohlenwasserstoffe, das Kohlenmonoxid und der Wasserstoff im Dreiwegekatalysator 3 oxidiert werden. Ein entsprechender, mindestens stöchiometrischer und vorzugsweise kraftstoffreicher Fettbetrieb ist auch während eines Kaltstarts des Motors 1 zweckmäßig.

Wie die obige Erläuterung eines Beispiels zeigt, ermöglichen das erfindungsgemäße Verfahren und die erfindungsgemäße Vorrichtung einen wirksamen Abbau von im Abgas einer Verbrennungseinrichtung enthaltenen Stickoxiden mittels direkter katalytischer Stickoxidspaltung in Verbindung mit einem aktiven Betriebsmanagement für die Verbrennungseinrichtung, durch das diese möglichst kraftstoffsparend mit langen Magerbetriebsphasen unterbrochen von kurzen, spaltkatalysatorregenerierenden Fettbetriebsphasen betrieben wird. Als Spaltkatalysatormaterialien eignen sich z.B. auch solche, wie sie für das SCR-Verfahren verwendet werden, jedoch kann vorliegend im Gegensatz zum SCR-Prozeß durch den zyklischen Wechsel von Mager- und Fettbetrieb auf eine aufwendige Reduktionsmittelzudosierung verzichtet werden. Auch eine Stickoxid- und/oder Ammoniakzwischenspeicherung in einem entsprechenden Adsorberkatalysator ist durch die direkte Stickoxidspaltung nicht notwendig. Durch die Verwendung eines Spaltkatalysatormaterials kann zudem auf Erdalkali- und Alkalimetallelemente im Katalysatormaterial verzichtet werden, wie sie als basische Metallkomponenten in NOₓ-Adsorberkatalysatoren notwendig sind. Die bei NOₓ-Speicherkatalysatoren bekannte Alterung durch Sulfatbildung am Katalysatormaterial und der dazugehörige Regenerationsprozeß lassen sich durch den Einsatz des Spaltkatalysatormaterials vermeiden.

Es versteht sich, daß neben dem oben beschriebenen Beispiel weitere Realisierungen der Erfindung möglich sind. So kann die Verbrennungseinrichtung ein Kraftfahrzeug-Verbrennungsmotor beliebigen Typs, insbesondere ein Otto- oder Dieselmotor, oder auch irgendeine stationäre Verbrennungseinrichtung sein. Wenngleich im gezeigten Beispiel der Spaltkatalysatoreinheit ein Dreiwegekatalysator nachgeschaltet ist, kann je nach Anwendungsfall nur die Spaltkatalysatoreinheitoder diese zusammen mit einer beliebigen Kombination weiterer Katalysatoreinheiten für unterschiedliche Abgasreinigungsfunktionen im Abgasstrang vorgesehen sein. Solche weitere Katalysatoreinheiten können z.B. nicht nur zur Oxidation von Kohlenwasserstoffen, Kohlenmonoxid und Wasserstoff, sondern auch zur Stickoxidreduktion in den Fettbetriebsphasen dienen, in denen die Spaltkatalysatoreinheit allein möglicherweise nicht die gewünschte Stickoxidverminderung gewährleistet.

## Patentansprüche

1. Verfahren zum Stickoxidabbau im Abgas einer Verbrennungseinrichtung, insbesondere eines Kraftfahrzeug-Verbrennungsmotors, bei dem
- die Verbrennungseinrichtung (1) abwechselnd in Mager- und Fettbetriebsphasen betrieben wird,
**dadurch gekennzeichnet, daß**
- die Stickoxide in den Magerbetriebsphasen mittels einer direkten katalytischen Spaltungsreaktion abgebaut werden, und
- ein zur katalysierung der Spaltungsreaktion eingesetztes Spaltkatalysatormaterial in der Fettbetriebsphasen regeneriert wird.

2. Vorrichtung zum Stickoxidabbau im Abgas einer Verbrennungseinrichtung, insbesondere eines Kraftfahrzeug-Verbrennungsmotors, mit
- einer Verbrennungseinrichtungs-Steuereinrichtung (4), welche die Verbrennungseinrichtung (1) abwechselnd in Mager- und Fettbetriebsphasen betreibt, und
- einer Anlage zur Reinigung des Abgases der Verbrennungseinrichtung wenigstens durch Abbau von darin enthaltenen Stickoxiden,
**dadurch gekennzeichnet, daß**
- die Abgasreinigungsanlage eine Spaltkatalysatoreinheit (2) beinhaltet, wobei die Spaltkatalysatoreinheit (2) ein Spaltkatalysatormaterial enthält, und in der Spaltkatalysatoreinheit (2)
- die im Abgas enthaltenen Stickoxide während der Magerbetriebsphasen mittels einer direkten katalytischen Spaltungsreaktion abgebaut werden, und
- das zur katalysierung der Spaltungsreaktion eingesetzte Spaltkatalysatormaterial in den Fettbetriebsphasen regeneriert wird.

3. Vorrichtung nach Anspruch 2, weiter
**dadurch gekennzeichnet, daß**
das Spaltkatalysatormaterial Wismut beinhaltet.

4. Vorrichtung nach Anspruch 3, weiter
**dadurch gekennzeichnet, daß**
das Wismut in Form einer δ-Wismutoxidphase im Spaltkatalysatormaterial vorhanden ist.

5. Vorrichtung nach einem der Ansprüche 2 bis 4, weiter
**dadurch gekennzeichnet, daß**
das Spaltkatalysatormaterial eine Edelmetalldotierung aufweist.

6. Vorrichtung nach einem der Ansprüche 2 bis 5, weiter
**dadurch gekennzeichnet, daß**
die Abgasreinigungsanlage in Reihe zur Spaltkatalysatoreinheit (2) eine oder mehrere weitere Katalysatoreinheiten (3) zur Oxidation von Kohlenwasserstoffen, Kohlenmonoxid und/oder Wasserstorf und/oder zur Stickoxidreduktion während der Fettbetriebsphasen beinhaltet.

## Claims

1. A process for breaking down nitrogen oxides in the exhaust emissions of an internal combustion device, in particular of a motor vehicle internal combustion engine, in which
- the internal combustion device (1) is operated alternately in lean and rich operating phases,
**characterised in that**
- the nitrogen oxides are broken down by means of a direct catalytic fission reaction, and
- a fission catalyst material used to catalyse the fission reaction is regenerated in the rich operating phases.

2. A device for breaking down nitrogen oxides in the exhaust emissions of an internal combustion device, in particular of a motor vehicle internal combustion engine, with
- an internal combustion device control device (4) which operates the internal combustion device (1) alternately in lean and rich operating phases, and
- a system for controlling the exhaust emissions of the internal combustion device at least by breaking down the nitrogen oxides contained therein,
**characterised in that**
- the exhaust emission control system contains a fission catalytic unit, said fission catalytic unit (2) containing a fission catalyst material and in the fission catalytic converter (2),
- the nitrogen oxides contained in the exhaust emissions are broken down during the lean operating phases by means of a direct catalytic fission reaction, and
- the fission catalyst material used to catalyse the fission reaction is regenerated in the rich operating phases.

3. A device in accordance with claim 2,
**characterised in that**
the fission catalyst material contains bismuth.

4. A device in accordance with claim 3, further
**characterised in that**
the bismuth is present in the fission catalyst material in the form of a δ-bismuth oxide phase.

5. A device in accordance with one of claims 2 to 4, further
**characterised in that**
the fission catalyst material features precious metal doping.

6. A device in accordance with one of claims 2 to 5, further
**characterised in that**
the exhaust emission control system contains one or more further catalytic units (3) in series with the fission catalytic unit (2) for the oxidation of hydrocarbons, carbon monoxide and/or hydrogen and/or for nitrogen oxide reduction during the rich operating phases.

## Revendications

1. Procédé pour la décomposition des oxydes d'azote dans les gaz d'échappement d'un système de combustion, en particulier d'un moteur à combustion interne dans un véhicule automobile, dans lequel :
-- le système de combustion (1) est amené à fonctionner en alternance dans des phases de fonctionnement pauvre et dans des phases de fonctionnement riche, **caractérisé en ce que** :
-- les oxydes d'azote dans les phases de fonctionnement pauvre sont décomposés au moyen d'une réaction de dissociation catalytique directe, et un matériau catalyseur de dissociation utilisé pour catalyser la réaction de dissociation est régénéré pendant les phases de fonctionnement riche.

2. Appareil pour la décomposition des oxydes d'azote dans les gaz d'échappement d'un système de combustion, en particulier d'un moteur à combustion interne dans un véhicule automobile, comprenant :
-- un dispositif de commande (4) pour le système de combustion, qui fait fonctionner le système de combustion (1) en alternance dans des phases de fonctionnement pauvre et dans des phases de fonctionnement riche, et
-- une installation pour purifier les gaz d'échappement du système de combustion, au moins par décomposition des oxydes d'azote contenus dans ces gaz d'échappement,
**caractérisé en ce que**
-- l'installation de purification des gaz d'échappement contient une unité à catalyseur de dissociation (2), ladite unité à catalyseur de dissociation (2) contient un matériau catalyseur de dissociation et, dans l'unité à catalyseur de dissociation (2) les oxydes d'azote contenus dans les gaz d'échappement sont décomposés pendant les phases de fonctionnement pauvre au moyen d'une réaction de dissociation catalytique directe, et
-- le matériau catalyseur de dissociation utilisé pour catalyser la réaction de dissociation est régénéré pendant les phases de fonctionnement riche.

3. Appareil selon la revendication 2, **caractérisé en outre en ce que** le matériau catalyseur de dissociation contient du bismuth.

4. Appareil selon la revendication 3, **caractérisé en outre en ce que** le bismuth est présent sous la forme d'une phase d'oxyde de bismuth 8 dans le matériau catalyseur de dissociation.

5. Appareil selon l'une des revendications 2 à 4, **caractérisé en outre en ce que** le matériau catalyseur de dissociation comporte un dopage de métal noble.

6. Appareil selon l'une des revendications 2 à 5, **caractérisé en outre en ce que** l'installation de purification de gaz d'échappement contient, en série par rapport à l'unité à catalyseur de dissociation (2), une ou plusieurs autres unités à catalyseur (3) pour l'oxydation des hydrocarbures, du monoxyde de carbone et/ou de l'hydrogène et/ou pour la réduction des oxydes d'azote pendant les phases de fonctionnement riche.
